# FASCICULE DE BREVET EUROPEEN

(11) **EP 4 132 809 B1**
(45) Date de publication et mention de la délivrance du brevet: **03.06.2026**
(21) Numéro de dépôt: 21716394.8
(22) Date de dépôt: 01.04.2021
(51) Int. Cl.: B60K 11/00, B60K 11/02, B60K 1/00

(54) **AGENCEMENT POUR REFROIDIR UNE PILE À COMBUSTIBLE ET UN MOTEUR ÉLECTRIQUE DE TRACTION ET/OU DE PROPULSION DE VÉHICULE**
ANORDNUNG ZUR KÜHLUNG EINER BRENNSTOFFZELLE UND EINES ELEKTRISCHEN ANTRIEBS- UND/ODER ANTRIEBSMOTOR EINES FAHRZEUGS
ARRANGEMENT FOR COOLING A FUEL CELL AND AN ELECTRIC TRACTION AND/OR PROPULSION MOTOR OF A VEHICLE

(30) Priorité: 07.04.2020 FR 2003450
(43) Date de publication de la demande: 15.02.2023
(73) Titulaire: Ampere SAS, 92100 Boulogne-Billancourt (FR); NISSAN MOTOR CO., LTD., Kanagawa 221-0023 (JP)
(72) Inventeur: YU, Robert, 78280 MONTIGNY LE BRETONNEUX (FR)
(74) Mandataire: Renault Group
(86) Numéro de dépôt international: PCT/EP2021/058653
(87) Numéro de publication internationale: WO 2021/204684

(56) Documents cités:
- DE-A1- 102015 006 387
- FR-A1- 2 816 258
- FR-A1- 2 868 607
- FR-B1- 2 816 258

## Description

### Domaine Technique de l'invention

L'invention concerne un agencement de refroidissement d'une pile à combustible, d'un moteur électrique de traction et/ou de propulsion, d'auxiliaires de ce système pour un véhicule, notamment un véhicule automobile. L'invention porte encore sur un véhicule comprenant un tel agencement. L'invention porte encore sur un procédé de fonctionnement d'un tel agencement.

### Etat de la technique antérieure

Un véhicule, en particulier un véhicule automobile, a généralement besoin d'une grande autonomie, notamment pour des grands déplacements. Ainsi, un véhicule équipé d'une batterie électrique de traction et/ou de propulsion comprend généralement une source d'énergie électrique complémentaire afin de limiter l'encombrement, la masse et le prix de la batterie embarquée. Par exemple une batterie offre de 300 km à 400 km d'autonomie et une source complémentaire, généralement de type pile à combustible, qui offre une autonomie de l'ordre de 400 km par exemple. Généralement la source complémentaire n'est utilisée que lorsque la batterie est déchargée, ce qui est le cas lorsque sa charge atteint 20% de sa charge totale.

Un véhicule comprenant une batterie électrique de traction et/ou de propulsion comprend généralement un système de gestion thermique ou refroidissement du moteur électrique entrainé par l'énergie électrique de la batterie et, plus généralement, un système de refroidissement de la chaîne de puissance électrique (électronique de puissance, convertisseurs de tension continue de type à basse tension vers une haute tension et/ou à haute tension vers une basse tension, chargeur, moteur(s) électrique(s), etc...).

Un véhicule comprenant un moyen de production d'énergie électrique tel qu'une pile à combustible requiert lui aussi un système de refroidissement de ce moyen de production d'énergie électrique.

Ainsi, un véhicule comprenant une batterie électrique alimentant un moteur électrique de traction et/ou propulsion du véhicule et une pile à combustible requiert un refroidissement pour la chaîne de puissance électrique et pour la pile à combustible.

Seulement, la plage des températures de fonctionnement de la chaîne de puissance électrique liée à la batterie de traction et/ou propulsion et la plage des températures de fonctionnement de la pile à combustible ne sont pas identiques, voire ne se recouvrent pas. En outre, la puissance thermique à évacuer de la pile à combustible est bien supérieure à la puissance thermique à évacuer de la chaîne de puissance électrique.

FR2816258A1 divulgue un agencement pour véhicule comprenant une pile à combustible, un moteur électrique et un unique circuit de refroidissement pour les deux éléments avec une première partie à haut débit et haute température comprenant une pompe à haut débit et une deuxième partie à bas débit et basse température.

### Présentation de l'invention

Le but de l'invention est de fournir un agencement remédiant aux inconvénients ci-dessus. En particulier, l'invention porte sur un procédé de fonctionnement d'un tel agencement.

Pour atteindre cet objectif, l'invention porte sur un agencement pour véhicule, notamment pour véhicule automobile, comprenant :
- une pile à combustible,
- un moteur électrique de traction et/ou de propulsion,
l'agencement comprenant un unique circuit de refroidissement refroidissant la pile à combustible et le moteur électrique, le circuit de refroidissement comprenant deux parties :
- une première partie à haut débit et haute température comprenant un échangeur haute température, notamment une première partie agencée pour refroidir la pile à combustible, et
- une deuxième partie à bas débit et basse température comprenant un échangeur basse température, notamment une deuxième partie agencée pour refroidir le moteur électrique.

L'échangeur basse température peut comprendre une entrée et l'échangeur haute température peut comprendre une sortie, la sortie de l'échangeur haute température pouvant être directement reliée à l'entrée de l'échangeur basse température.

L'agencement peut comprendre une chaîne de traction et/ou de propulsion électrique d'un tel véhicule, la chaîne pouvant comprendre le moteur électrique de traction et/ou de propulsion, un compresseur et/ou un refroidisseur d'air d'admission, notamment d'air d'admission suralimenté, et/ou un ou des éléments d'électronique de puissance, la chaîne pouvant être agencée pour être refroidie par la deuxième partie du circuit de refroidissement.

La première partie comprend une pompe à haut débit, notamment un haut débit compris entre 8000 l/h et 9000 l/h, et la deuxième partie comprend une pompe à bas débit, notamment un bas débit compris entre 2000 l/h et 3000 l/h.

L'agencement peut comprendre un aérotherme destiné à permettre de chauffer un habitacle d'un tel véhicule, l'aérotherme pouvant être agencé sur une branche de la première partie du circuit ou pouvant être agencé sur la deuxième partie, notamment en aval du refroidissement de la chaîne.

L'invention porte encore sur un véhicule, notamment un véhicule automobile, comprenant un agencement tel que défini précédemment.

L'invention porte encore sur un procédé de fonctionnement d'un agencement tel que défini précédemment, et, en situation de roulage du véhicule, le fluide admis dans l'échangeur haute température est à une première température, notamment une première température comprise entre 77 degrés et 83 degrés, et ressort à une deuxième température, notamment une deuxième température comprise entre 71 degrés et 77 degrés, et le fluide admis dans l'échangeur basse température est, ou est sensiblement, à la deuxième température et ressort à une troisième température, notamment une troisième température comprise entre 62 degrés et 68 degrés.

Préalablement au démarrage de la pile à combustible, la première partie et/ou la deuxième partie du circuit de refroidissement peut chauffer et/ou maintenir la pile à combustible à une température prédéterminée.

Préalablement au démarrage de la pile à combustible, l'aérotherme peut être parcouru par le fluide de sorte à réchauffer l'habitacle.

En cas de fonctionnement du véhicule avec l'énergie de la batterie, la pompe à haut débit peut être arrêtée.

En situation de roulage du véhicule avec uniquement l'énergie de la pile à combustible, et sous situation de température extérieure négative, les calories dégagées par la chaîne de traction et la pile à combustible peuvent être transmises au fluide de refroidissement traversant l'aérotherme, la circulation du fluide de refroidissement au travers des radiateurs ou échangeurs haute et basse températures pouvant être interrompue.

### Présentation des figures

Ces objets, caractéristiques et avantages de la présente invention seront exposés en détail dans la description suivante d'un mode de réalisation et de modes d'exécution faite à titre non-limitatif en relation avec les figures jointes parmi lesquelles :
la figure 1 est une vue schématique d'un véhicule selon un mode de réalisation ;
la figure 2 est un schéma d'un circuit de refroidissement selon un mode de réalisation ;
la figure 3 est un schéma illustrant des flux au sein du circuit de refroidissement lors de l'utilisation de l'énergie électrique provenant d'une pile à combustible pour mouvoir le véhicule selon le mode de réalisation ;
la figure 4 est un autre schéma illustrant des flux au sein du circuit de refroidissement lors de l'utilisation de l'énergie électrique provenant de la pile à combustible pour mouvoir le véhicule selon le mode de réalisation ;
la figure 5 est un schéma illustrant des flux au sein du circuit de refroidissement lors de l'utilisation d'une batterie de traction et/ou de la pile à combustible pour mouvoir le véhicule selon le mode de réalisation ;
la figure 6 est un autre schéma illustrant des flux au sein du circuit de refroidissement lors de l'utilisation de la batterie de traction et/ou de propulsion pour mouvoir le véhicule selon le mode de réalisation ;
la figure 7 est un autre schéma illustrant des flux au sein du circuit de refroidissement lors de l'utilisation de la batterie de traction et/ou de propulsion pour mouvoir le véhicule selon le mode de réalisation ;
la figure 8 est un schéma illustrant des flux au sein du circuit de refroidissement lors de l'utilisation de la batterie de traction et/ou de propulsion pour mouvoir le véhicule selon le mode de réalisation ;
la figure 9 est un schéma d'un circuit de refroidissement selon une variante du mode de réalisation.

### Description détaillée

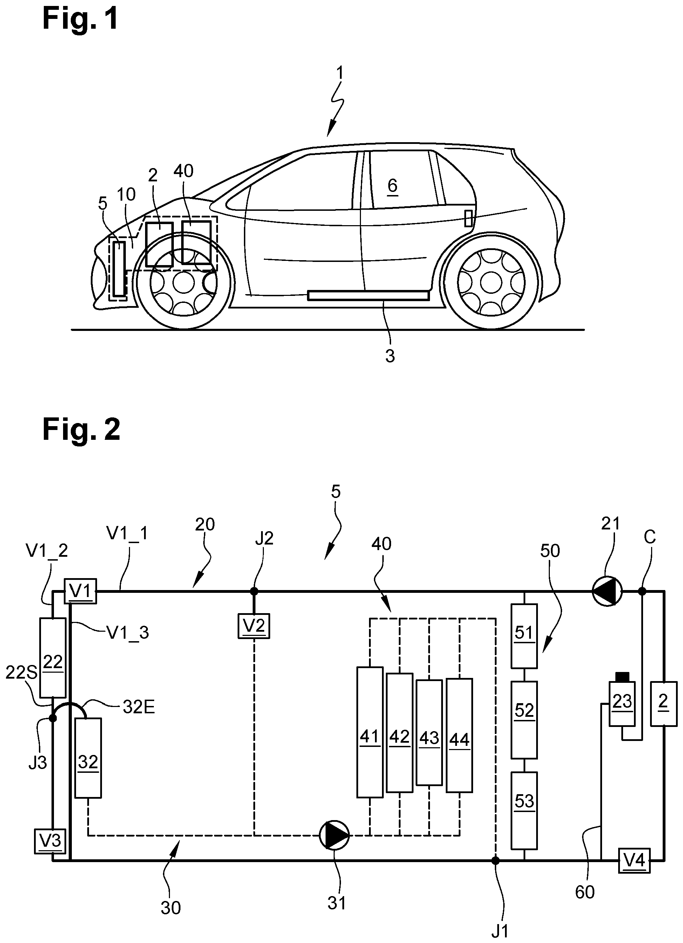

La figure 1 illustre schématiquement un véhicule, en particulier un véhicule automobile 1, selon un mode de réalisation. Le véhicule comprend un habitacle 6. Le véhicule comprend un moyen de production d'énergie électrique, de préférence une pile à combustible 2. Le véhicule comprend encore une batterie électrique 3 de traction et/ou de propulsion destinée à stocker de l'énergie électrique. Le véhicule comprend encore une chaîne de puissance électrique de traction et/ou de propulsion 40 apte à utiliser l'énergie électrique fournie par la batterie 3 et/ou par le moyen de production d'énergie électrique, pour se mouvoir.

Le véhicule comprend encore un agencement 10.

L'agencement 10 comprend la pile à combustible 2 et un moteur électrique 42 de traction et/ou de propulsion. L'agencement 10 comprend encore un unique circuit de refroidissement 5. Avantageusement, l'agencement 10 comprend la chaîne de puissance électrique 40. Le circuit 5 permet de refroidir la pile à combustible 2 et le moteur électrique 42. Un fluide ou liquide, par exemple de l'eau désionisée, est destiné à circuler au sein du circuit de refroidissement 5.

A noter que le véhicule comprend de préférence un système de refroidissement de la batterie 3 indépendant du circuit de refroidissement 5.

Comme illustré sur la figure 2, le circuit de refroidissement 5 comprend deux parties 20, 30.

Une première partie 20, illustrée en traits pleins sur la figure 2, est à haut débit et/ou à haute température. La première partie 20 comprend un radiateur ou échangeur haute température 22. De préférence, la première partie 20 est agencée pour refroidir la pile à combustible 2. De préférence, la première partie 20 comprend une pompe à haut débit 21, par exemple un haut débit compris entre 8000 l/h et 9000 l/h.

Une deuxième partie 30, illustrée en pointillés sur la figure 2, est à bas débit et/ou à basse température. La deuxième partie 30 comprend un radiateur ou échangeur basse température 32. De préférence, la deuxième partie 30 est agencée pour refroidir le moteur électrique 42 et de manière générale, l'ensemble de la chaîne de puissance électrique 40. Avantageusement, la chaîne 40 de traction et/ou de propulsion électrique comprend le moteur électrique 42, un compresseur 44 et/ou un refroidisseur d'air d'admission 43, par exemple d'air d'admission suralimenté, et/ou un ou des éléments d'électronique de puissance 41. Par élément(s) d'électronique de puissance 41, on entend par exemple un onduleur, et/ou un ou deux convertisseurs de tension continue, et/ou un chargeur. Le moteur électrique 42 peut comprendre un échangeur huile-eau s'il est refroidi par de l'huile. Par exemple le compresseur 44 est électrique et/ou alimente la pile à combustible en air. De préférence, la deuxième partie 30 comprend une pompe à bas débit 31, par exemple un bas débit compris entre 2000 l/h et 3000 l/h.

Ainsi la deuxième partie 30 permet de refroidir cette chaîne 40 en refroidissant directement ses composants ou des refroidisseurs ou échangeurs intégrés ou adaptés à ces composants. De préférence, comme illustré sur la figure 2, les composants de la chaîne 40 sont agencés en parallèle. Ainsi, le débit sortant de la pompe 31 peut par exemple se diviser pour refroidir chaque composant, le fluide circulant dans des conduits distincts alimentant chaque échangeur de chaque composant. De préférence, la pompe à bas débit 31 est agencée en amont et à proximité de la chaîne 40.

En d'autres termes, le circuit 5 est un moyen de gestion thermique de la pile à combustible 2 et de la chaîne de puissance électrique 40.

Plus précisément, l'échangeur basse température 32 comprend une admission ou entrée 32E par laquelle arrive le fluide dans l'échangeur 32. L'échangeur haute température 22 comprend une évacuation ou sortie 22S par laquelle sort le fluide de l'échangeur 22. La sortie 22S de l'échangeur haute température 22 est directement, ou sensiblement directement, reliée à l'entrée 32E de l'échangeur basse température 32. Autrement dit, le fluide sortant de l'échangeur haute température 22 entre directement ou sensiblement directement dans l'échangeur basse température 32. Pour ce faire, une jonction J3 est agencée entre la première partie 20 et la deuxième partie 30 du circuit 5. Cette jonction J3 est agencée entre la sortie 22S et l'entrée 32E de sorte à permettre au fluide sortant de l'échangeur haute température 22 d'entrer, de préférence directement ou sensiblement directement, dans l'échangeur basse température 32. Ainsi, la jonction J3 permet au fluide de refroidissement de passer de la première partie 20 à haute pression et/ou à haute température à la deuxième partie 30 à basse pression et/ou basse température.

De préférence, l'agencement 10 comprend un radiateur de chauffage ou aérotherme 51 destiné à permettre de chauffer l'habitacle 6. Par exemple, comme illustré sur la figure 2, l'aérotherme 51 est agencé sur une branche 50 de la première partie 20 du circuit 5.

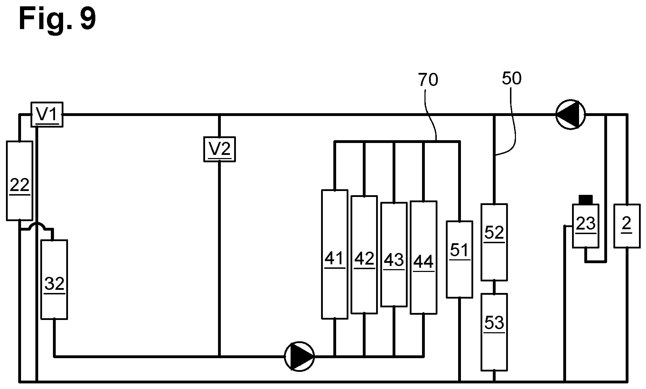

Alternativement, comme illustré sur la figure 9, une variante de mode de réalisation comprend l'aérotherme agencé sur la deuxième partie 30 du circuit 5. Par exemple l'aérotherme est en aval du refroidissement de la chaîne 40, de préférence sur une branche 70 de la deuxième partie 30.

De préférence, l'agencement 10 comprend encore un réchauffeur de l'hydrogène 53 et/ou un désioniseur 52. De préférence, ce réchauffeur d'hydrogène et/ou ce désioniser sont agencés au niveau de la branche 50.

Avantageusement, la première partie 20 et la deuxième partie 30 comprennent des conduits et/ou des durites de sorte à assurer les écoulements ou transferts de fluide entre les éléments à refroidir.

Ainsi la pile à combustible bénéficie d'un haut débit de fluide de refroidissement, le fluide étant entraîné principalement par le biais de la pompe 21 sur cette première partie 20.

De préférence, l'agencement 10 comprend un bocal de remplissage et de dégazage 23 du fluide de refroidissement. Le circuit 5 comprend de préférence une branche 60 au niveau de laquelle est installée le bocal 23.

Evidemment, les première et deuxième parties 20, 30 comprennent des conduits et/ou durites les complétant (non référencés).

Comme illustré sur les figures 2 à 9, une vanne V1, de préférence à trois voies, est agencée au niveau de la première partie 20. Par exemple, comme illustré sur la figure 2, une voie V1_1 de la vanne V1 est reliée à la pompe 21. La voie V1_1 permet de stopper le passage du fluide ou de le laisser passer vers une voie V1_2 et/ou vers une voie V1_3. Le passage de la voie V1_1 à la voie V1_2 uniquement permet d'envoyer tout le fluide traversant la vanne V1 vers l'échangeur haute température 22. En effet, la voie V1_2 est reliée à l'admission ou entrée de l'échangeur 22. Le passage de la voie V1_1 vers la voie V1_3 uniquement permet d'envoyer tout le fluide traversant la vanne V1 vers le reste du circuit haute pression sans être refroidi par l'échangeur haute température 22. Autrement dit l'échangeur haute température 22 est contourné, non traversé, c'est-à-dire que l'échangeur 22 subit un bypass.

De préférence, comme illustré sur la figure 2, une jonction J2 est agencée entre la vanne V1 et la pompe 21. La jonction J2 permet au fluide de refroidissement de passer de la première partie 20 à haute pression et/ou à haute température à la deuxième partie 30 à basse pression et/ou basse température. Avantageusement, comme illustré sur les figures 2 à 9, une vanne V2, par exemple à deux voies, est agencée entre la première partie 20 et la deuxième partie 30 du circuit 5. Par exemple, la vanne V2 est agencée entre la pompe haute pression 21 et la pompe basse pression 31, par exemple au niveau ou sensiblement au niveau de la jonction J2.

Avantageusement, comme illustré en particulier sur les figures 2, 7 et 8, une vanne V3, par exemple à deux voies, est agencée sur la première partie 20 du circuit 5 en aval de l'échangeur haute température 22. Comme il sera vu ultérieurement, cette vanne V3 permet de stopper le débit de fluide dans la branche où elle se trouve. Ainsi, en fermant la vanne V3, on force tout le fluide sortant de l'échangeur à haute température 22 à entrer dans l'échangeur à basse température 32 via la jonction J3 entre la première partie 20 et la deuxième partie 30.

De préférence, comme illustré sur la figure 2, une jonction J1 permet au fluide de refroidissement de passer de la deuxième partie 30 à basse pression et/ou à basse température à la première partie 20 à haute pression et/ou à haute température. Avantageusement, cette jonction J1 est agencée en aval de la chaîne 40.

Pour empêcher le fluide d'aller refroidir les éléments agencés au niveau de la branche 50, la vanne V2 et la voie V1_1 de la vanne V1 sont simultanement fermées. Le fluide circule ainsi sans avoir été refroidi par les échangeurs 22, 32, notamment au travers de la branche 60 s'étendant entre la jonction J1 et l'admission de la pompe 21 où se trouve le bocal 23.

Par exemple la pile à combustible 2 est agencée entre la jonction J1 ou sensiblement la jonction J1 et l'admission de la pompe 21.

De préférence, comme illustré sur la figure 2, une vanne V4, par exemple à deux voies, est agencée en amont de la pile à combustible 2. La vanne V4 en position fermée empêche le fluide d'aller refroidir la pile à combustible 2. Dans ce cas, le fluide est évacué dans la branche 60 vers le bocal 23.

De préférence, la pompe 21 se trouve donc juste après la pile à combustible 2, par exemple là où est branché le retour du fluide du bocal 23, au niveau d'une connexion C (illustrée sur la figure 2). Avantageusement, ce point d'arrivée du bocal 23 est à la pression la plus basse du circuit 5. A partir de ce point la pompe 21 monte la pression du fluide de sorte à le faire passer vers le radiateur haute température 22, en cas de vanne V1 reliant les voies V1_1 et V1_2.

Des modes d'exécution de procédés de fonctionnement de l'agencement 10 sont décrits ci-après.

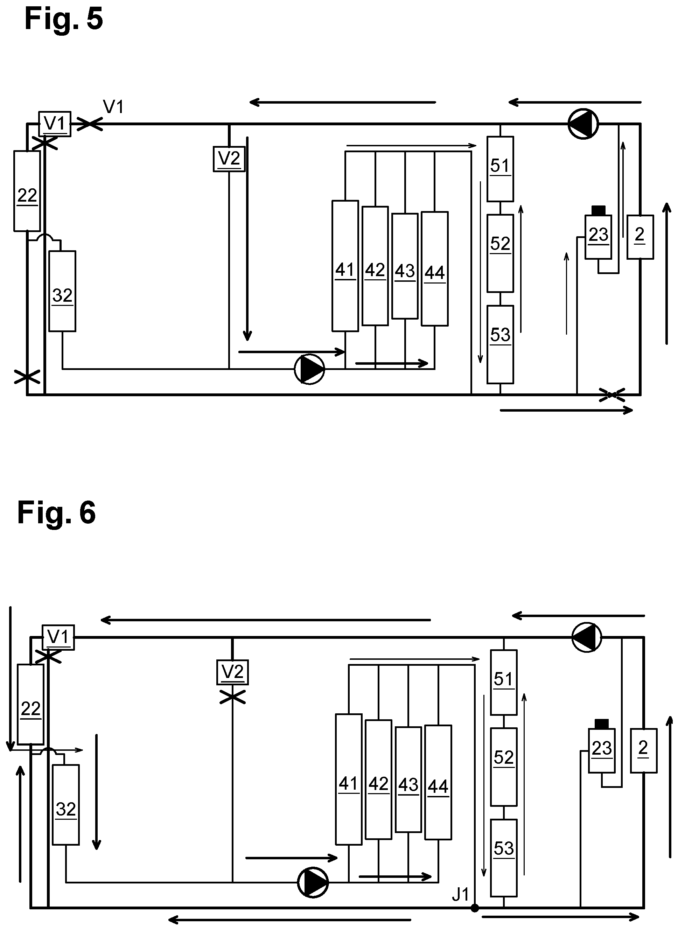

La figure 6 illustre un mode dans lequel le véhicule roule grâce à l'énergie électrique stockée dans la batterie 3. Par exemple la température extérieure est chaude, comme en été par exemple. Dans de telles conditions, la chaîne 40 a besoin d'un refroidissement optimal. Pour ce faire, la voie V1_3 de la vanne V1 est fermée de sorte à fermer le passage de by-pass de l'échangeur haute température 22. La vanne V2 est fermée alors que les vannes V3 et V4 sont ouvertes. Le fluide sortant de la pompe haute pression 21 va directement dans l'échangeur haute température 22 puis dans l'échangeur basse température 32 via la jonction J3. Le fluide sortant de l'échangeur 32 traverse ensuite la chaîne 40 avant de se diviser à la jonction J1. Une partie du débit part depuis J1 vers l'échangeur basse température 32 après avoir traversé la vanne V3, sans traverser et donc sans être refroidi par l'échangeur haute température 22. Il est donc mélangé avec le fluide sortant de l'échangeur haute température 22 avant d'entrer dans l'échangeur basse température 32. Une autre partie du débit part refroidir la branche 50 avant de retourner vers l'échangeur 22. Le reste du débit issu de J1 part vers la pile à combustible 2 avant de rejoindre la pompe haute pression 21. Dans ce mode, l'ensemble des composants de la chaîne de traction et/ou propulsion électrique 40 bénéficie d'un refroidissement optimal grâce aux deux échangeurs 22, 32 agencés en série. De préférence, si besoin, la pompe 21 participe à la circulation du fluide au sein du circuit 5 ce qui augmente le débit du fluide. Dans ce cas, les deux pompes fonctionnent ce qui améliore encore le refroidissement de la chaîne 40. Dans ce mode, utilisé par exemple en été quand il fait chaud, et que le véhicule roule grâce à l'électricité fournie par la batterie 3, le refroidissement de la chaîne est largement amélioré.

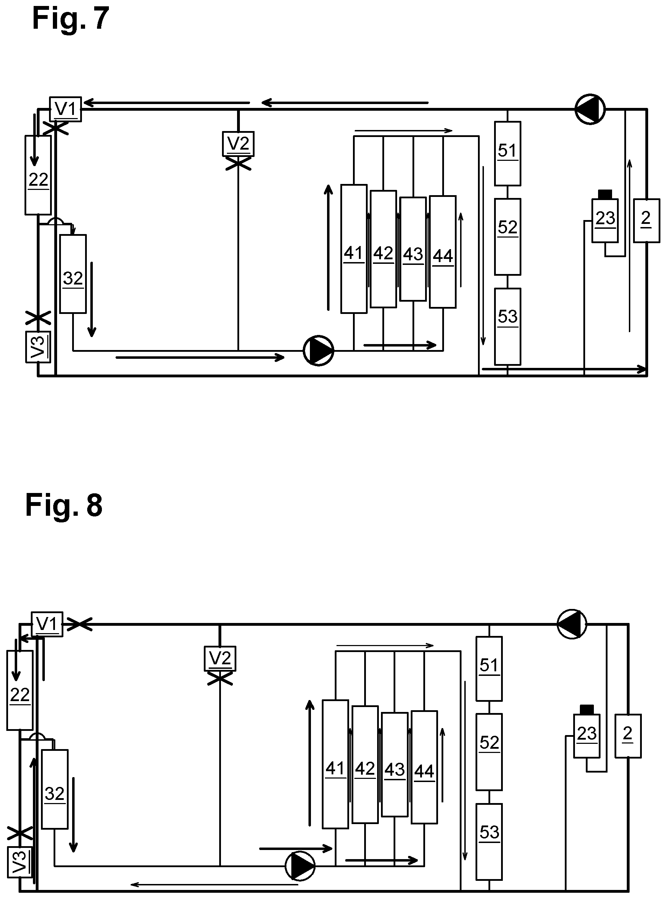

La figure 7 illustre une amélioration du refroidissement de la chaîne 40, notamment en conditions chaudes, l'été par exemple, lorsque le véhicule roule via l'énergie électrique fournie par la batterie 3. La vanne V3 sur la branche principale sortant de l'échangeur haute température 22 est fermée ce qui supprime le débit dans cette branche. La voie V1_3 de la vanne V1 est fermée ce qui empêche le retour de fluide depuis la jonction J1 vers l'échangeur 22. Enfin, la vanne V2 est fermée empêchant le fluide d'entrer dans la deuxième partie 30 par celle-ci. Ainsi, l'intégralité du débit traversant l'échangeur haute température 22 entre dans l'échangeur basse température 32. Le passage dans les deux radiateurs, d'abord le haute température puis le basse température, maximise le refroidissement du fluide et par conséquent le refroidissement des composants de la chaîne 40. De préférence, le débit arrivant à la jonction J1 passe dans la plie à combustible 2 pour la maintenir à une température donnée, ou proche de cette température donnée. Un tel maintien à cette température de la pile favorise son démarrage par la suite. Dans cette configuration, le refroidissement de la chaîne 40 est optimal.

Comme évoqué précédemment, la figure 9 illustre une variante de l'agencement 10 au niveau du circuit de refroidissement 5, plus précisément de la deuxième partie 30. En effet, la position du radiateur 51 de chauffage de l'habitacle du véhicule est agencée sur une branche 70, par exemple après la jonction des conduits de chaque composant de la chaîne 40. Ainsi, le débit parcourant l'aérotherme 51 est davantage conséquent puisqu'il correspond au débit total traversant la chaîne 40. La branche 50 comprenant le désioniser a alors un débit plus faible.

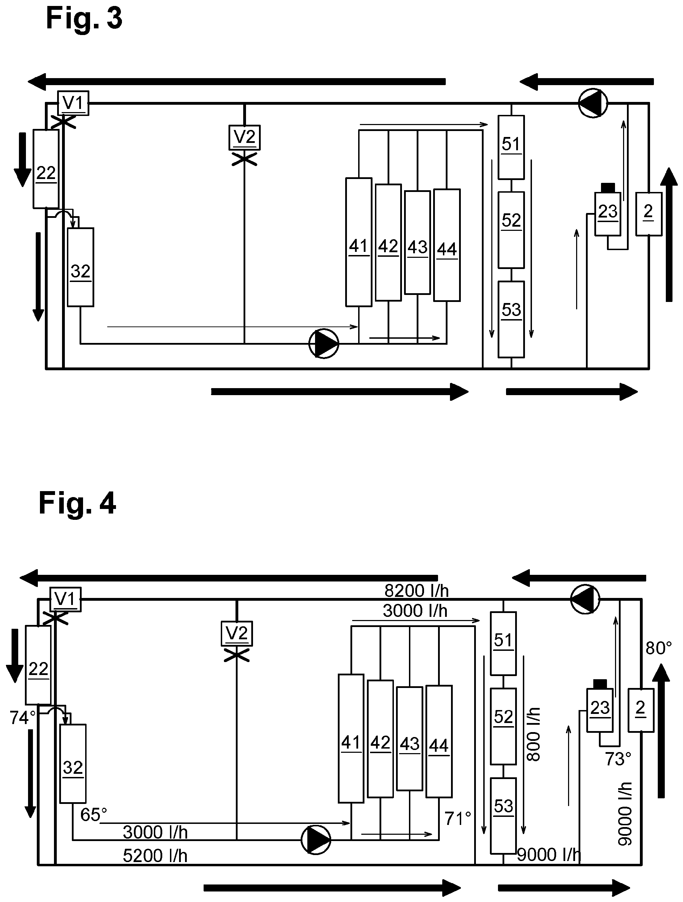

En situation de roulage du véhicule en utilisant l'énergie électrique produite par la pile à combustible 2 en fonctionnement, notamment illustrée sur les figures 3 et 4, et/ou d'utilisation d'un ou de composants de la chaîne 40. La pile à combustible étant chaude, et de manière générale l'ensemble du circuit étant chaud, un refroidissement est nécessaire. Le fluide admis dans l'échangeur haute température 22 est à une première température. Par exemple, cette première température est comprise entre 77 degrés et 83 degrés, de préférence de l'ordre de 80 degrés. Le fluide ressort de l'échangeur haute température 22 à une deuxième température. Par exemple, la deuxième température est comprise entre 71 degrés et 77 degrés, de préférence de l'ordre de 74 degrés. Le fluide sortant de l'échangeur haute température 22 et admis dans l'échangeur basse température 32 est, ou est sensiblement, à la deuxième température. Le fluide ressort de l'échangeur basse température 32 à une troisième température. La troisième température est comprise entre 62 degrés et 68 degrés, de préférence de l'ordre de 65 degrés.

Pour ce faire, la vanne V1 permet uniquement le passage de la voie V1_1 à la voie V1_2. La vanne V2 est alors fermée (illustrée par une croix) de sorte à ce que le fluide sortant de la pompe 21 n'entre pas dans la deuxième partie 30 au niveau de la vanne V2. Ainsi le fluide provenant notamment de la pile à combustible 2 est envoyé sous pression vers l'échangeur haute température 22 de sorte à être refroidi. A la sortie de l'échangeur 22, le débit total (par exemple de l'ordre de 9000 l/h) est divisé en deux. La majeure partie du débit du fluide ayant traversé l'échangeur 22, par exemple de l'ordre de 6000//h à 7000 l/h retourne directement vers la pile à combustible 2. Les vannes V3 et V4 (non représentées sur la figure 3) sont donc ouvertes et laissent passer le fluide. Un petit débit, par exemple de l'ordre de 2000 l/h à 3000 l/h est aspiré par la pompe 31 de la deuxième partie 30. Ce faible débit circule vers le radiateur basse température 32 pour continuer le refroidissement du fluide afin de passer, par exemple, en-dessous de 65 degrés Celsius. Ce faible débit passe ensuite dans les organes 41, 42, 43, 44 de la chaîne 40 de traction et/ou de propulsion électrique (machine, électroniques, etc). Le faible débit rejoint le fort débit au niveau de la jonction J1. En d'autres termes, le faible débit parcourant la deuxième partie 30 du circuit 5 rejoint la première partie 20 du circuit 5 à la jonction J1. Ainsi, à la jonction J1, le fluide provenant de l'échangeur 22 est mélangé avec le fluide provenant de l'échangeur 32. De préférence, une petite partie, par exemple inférieure à 1%, part dans la branche 60, dans le bocal 23 pour être dégazé. La grande majorité du fluide traverse donc la vanne V4 (ouverte) et part refroidir la pile à combustible 2. Le débit du fluide ayant traversé les composants de la chaîne 40 contribue ainsi au refroidissement de la pile à combustible 2.

La figure 4 illustre un exemple de répartition des débits et des températures à divers points du circuit de refroidissement 5, en mode de refroidissement, lorsque le véhicule roule avec l'électricité produite par la pile à combustible. Par exemple, le fluide entre dans la pile à 73°C et sort à 80°C ce qui correspondant à une puissance thermique de l'ordre de 60 kW avec un débit de l'ordre de 9000 l/h. Après la pompe électrique 21, une faible partie du débit (par exemple de l'ordre de 800 l/h) part dans la branche 50, traverse l'aérotherme 51 pour chauffer l'habitacle 6, et/ou traverse le désioniseur 52, et/ou chauffe l'hydrogène via le réchauffeur d'hydrogène 53, par exemple après une détente de l'ordre de 700 bars à environ 2 bars. Le froid produit par cette détente peut par exemple évacuer 2 à 5 kW de chaleur selon la demande de débit et la pression de l'hydrogène dans le réservoir de stockage. Le reste du débit sortant de la pompe 21, par exemple de l'ordre de 8200 l/h, entre dans l'échangeur 22 de sorte que sa température passe par exemple de l'ordre de 80°C en entrée, à environ 74°C en sortie. Par exemple, le débit du liquide de refroidissement sortant de l'échangeur 22 et aspiré par la pompe 32, autrement dit le fluide allant dans la deuxième partie 30, est de l'ordre de 3000 l/h. Par exemple la température du fluide ayant traversé l'échangeur basse température 32 après avoir traversé l'échangeur haute température 22, sort à une température de l'ordre de 65°C. Ce fluide traverse alors les moyens de refroidissement des composants de la chaîne 40, de sorte à les refroidir, ce qui augmente la température de fluide en sortie de la chaîne 40. Ainsi, le fluide de la deuxième partie 30 rejoignant la jonction J1 a, par exemple, une température de l'ordre de 71°C avant d'être mélangé à un débit de fluide de la première partie 20 par exemple de l'ordre de 5200 l/h, ayant uniquement traversé l'échangeur 22. Ainsi, le débit après la jonction J1, dans la première partie 20 du circuit de refroidissement 5, est à nouveau de l'ordre de 9000 l/h.

Préalablement au démarrage de la pile à combustible 2, la première partie 20 et/ou la deuxième partie 30 du circuit de refroidissement 5 chauffe et/ou maintient la pile à combustible 2 à une température prédéterminée.

De préférence, comme illustré sur la figure 5, un démarrage à froid du véhicule se fait par l'électricité provenant de la batterie 3, la pile à combustible 2 étant arrêtée. Dans ce mode, la chaleur produite par les composants de la chaîne 40 et/ou des auxiliaires de la pile à combustible est utilisée pour chauffer l'habitacle 6 et/ou la pile à combustible. Dans ce mode, la voie V1_1 de la vanne V1 est fermée de sorte à empêcher le fluide d'entrer dans l'échangeur 22. La vanne V2 est ouverte et laisse passer le fluide dans la deuxième partie 30 du circuit 5. Dans ce cas, un fort débit traverse la chaîne 40. A noter que la vanne V3 est alors fermée et que la voie V1_3 de la vanne V1 est également fermée. Ainsi, le fluide arrivant à la jonction J1 après avoir traversé la chaîne 40 part vers la branche 50 et la branche 60 et la vers la pile à combustible 2. En effet, dans ce mode la vanne V4 est ouverte. Dans ce mode, la pile à combustible est réchauffée ce qui permet de meilleures conditions pour son démarrage ultérieur.

Alternativement, dans ce même mode, la vanne V4 est fermée et empêche le fluide de refroidir la pile à combustible (croix en pointillés sur la figure 5). Cette configuration a notamment un intérêt en cas de batterie 3 peu déchargée, voire intégralement chargée. Cette configuration permet d'augmenter le débit dans la branche 50, par exemple pour générer un meilleur chauffage de l'habitacle via l'aérotherme 51. Ainsi, préalablement au démarrage de la pile à combustible 2, l'aérotherme 51 est parcouru par le fluide de sorte à réchauffer l'habitacle 6.

En hiver par exemple, lorsque le véhicule automobile est tracté et/ou propulsé par la pile à combustible 2, et roule à faible puissance, ce qui est notamment le cas d'une circulation du véhicule en ville par exemple, et qu'une consigne de chauffage de l'habitacle 6 est élevée (situation de grand froid, par exemple), le circuit de la figure 5 peut aussi être utilisé. Dans ce cas la vanne 4 est ouverte, et les calories dégagées par tous les composants du véhicule, telles la chaine de traction 40 et la pile à combustible, sont utilisées pour chauffer l'habitacle 6, le fluide ne passant pas dans les radiateurs 22, 32.

En résumé, dans le mode illustré sur la figure 5, le véhicule roule grâce à l'énergie électrique fournie par la batterie 3 tout en permettant un chauffage significatif de l'habitacle et/ou un chauffage ou préchauffage ou maintien à température de la pile à combustible de sorte à faciliter son utilisation ultérieure. Il est à noter qu'en hiver et/ou par grand froid, lorsque la pile à combustible alimente le moteur électrique, sa chaleur dégagée dans le fluide de refroidissement peut être utilisée à des fins de chauffage de l'habitacle.

En cas d'inutilisation de la pile à combustible 2, de préférence la pompe à haut débit 21 est arrêtée. Plus précisément, la figure 8 illustre une configuration du circuit de la figure 2 dans des conditions chaudes, l'été par exemple, lorsque le véhicule roule via l'énergie électrique fournie par la batterie 3. S'il n'y a pas besoin de préchauffer la pile à combustible 2, par exemple parce que la batterie 3 est intégralement ou sensiblement intégralement chargée, le débit pour refroidir la pile à combustible est supprimé. En effet, la voie V1_3 de la vanne V1 est ouverte, c'est-à-dire que la vanne V1 ouvre la branche by-pass de l'échangeur 22 tout en ouvrant la voie V1_2 pour permettre le flux vers l'échangeur 22. De préférence, la voie V1_1 est fermée de sorte à empêcher l'arrivée de fluide depuis la pompe 21, la pompe étant de préférence stoppée. En outre, la vanne V2 est également fermée. Dans ce cas la circulation du fluide dans la branche vers la pile à combustible 2 est coupée. Ainsi, dans des conditions chaudes, le refroidissement de la chaîne de traction et/ou de propulsion électrique 40 est grandement favorisé. Ceci assure un fonctionnement optimal des composants électriques, et par conséquent un fonctionnement optimal du véhicule, le véhicule roulant par le biais de l'énergie électrique de la batterie 3.

A noter qu'alternativement à ce qui est illustré sur la figure 2, selon les conditions de fonctionnement de chaque composant (notamment le débit, et/ou la température du liquide de refroidissement), certains moyens de refroidissement des composants de la chaîne 40 peuvent être agencés en série si leurs températures à l'entrée sont suffisamment différentes. Par exemple, un moyen de refroidissement d'un composant ayant besoin d'une basse température de fluide de refroidissement est agencé devant, autrement dit en amont, d'un moyen de refroidissement d'un composant ayant besoin d'une haute température de fluide de refroidissement.

En résumé, le circuit unique de refroidissement 5 permet d'avoir une partie de fort débit (8000l/h à 9000 l/h par exemple) et/ou à haute température (73°C à 80°C par exemple) et une partie de faible débit (2000l/h à 3000 l/h par exemple) et/ou à basse température (65°C à 70°C par exemple). Les calories des première et/ou deuxième parties 20, 30, notamment provenant des moyens de refroidissement des composants de la chaîne 40 et/ou de la pile à combustible 2, peuvent être récupérées pour chauffer l'habitacle et/ou la pile à combustible avant son démarrage, notamment en contournant un des deux, voire les deux échangeurs 22, 32.

Le débit total du fluide traversant les moyens de refroidissement des composants de la chaîne 40 peut contribuer, c'est-à-dire s'additionner, au débit ayant uniquement traversé l'échangeur 22 et destiné à refroidir la pile à combustible 2. Ceci permet de s'affranchir d'installer une pompe à très fort débit pour la pile à combustible qui nécessite un fort débit.

L'échangeur basse température 32 reçoit directement le fluide à la sortie de l'échangeur haute température 22. Ainsi, la température du fluide à l'entrée de l'échangeur basse température est particulièrement basse et il en résulte que la température à la sortie de l'échangeur basse température est extrêmement basse, notamment inférieure ou égale à 65°C.

Ainsi, en cours de fonctionnement du véhicule, c'est-à-dire en roulage en utilisant l'énergie électrique de la batterie, ce qui correspond de préférence à l'usage principal du véhicule, le refroidissement des composants de la chaîne de traction et/ou de propulsion électrique est maximisé. En effet, les moyens de refroidissement des composants 41, 42, 43, 44 bénéficient du fluide refroidit par l'échangeur basse température 32 mais également refroidit par l'échangeur haute température 22, par exemple de dimensions et capacités supérieures.

En outre, l'architecture du circuit 5 est simple tout en permettant d'avoir un haut débit de fluide pour refroidir la pile à combustible sans intégrer une pompe à très haut débit. L'architecture admet un écart de température conséquent entre la température maximale, de l'ordre de 80°C par exemple, et la température minimale, de l'ordre de 65°C par exemple.

Ainsi, le véhicule dispose d'une grande autonomie. En effet, la pile à combustible 2 permet de produire de l'électricité si bien qu'une fois que la batterie 3 est vide ou sensiblement vide, le véhicule peut continuer à se déplacer via l'énergie électrique provenant de la pile à combustible. Bien que la température du liquide de refroidissement soit par exemple limitée à 65°C à l'entrée de chaque moyen de refroidissement de composant à refroidir (électroniques de puissance 41, convertisseur DC/DC, chargeur, moteur électrique 42...) sur la chaîne 40 et que la pile à combustible requiert un refroidissement avec une température de fluide entrant supérieure à celle de la chaîne 40, par exemple de l'ordre de 73°C, un seul circuit assure ces conditions. De préférence, la température du fluide à la sortie des composants de la chaîne 40 est de l'ordre 3°C à 5°C au-dessus de celle de l'entrée. Pour la pile à combustible, la température à la sortie ne dépasse pas de préférence 80°C par exemple. Concernant la puissance thermique, la pile 2 dégage par exemple cinq à dix fois la puissance thermique dégagée par les composants de la chaîne 40. A noter que le débit pour refroidir chaque composant de la chaîne 40 varie par exemple de 300 l/h à 800 l/h selon leur puissance dégagée, par exemple avec un débit total de l'ordre 2000 l/h à 3000 l/h. La pile 2 requiert par exemple un débit de 8000 l/h à 9000 l/h. Par exemple, la puissance thermique à évacuer pour la pile est de l'ordre de 60 kW et l'ensemble des composants de la chaîne 40 dégage de l'ordre de 3 à 20 kW. L'unique circuit de refroidissement 5, utilisant un même fluide, admet ces différences en puissances, températures et débits du liquide de refroidissement entre les composants de la chaîne 40 et la pile à combustible 2.

Ainsi, bien que les plages des températures de fonctionnement de la chaîne de puissance électrique liée à la batterie de traction et/ou propulsion et celle des températures de fonctionnement de la pile à combustible ne soient pas identiques voire ne se recouvrent pas, la solution permet ces températures de fonctionnement différentes, même simultanément. En outre, la solution permet d'évacuer les différentes puissances thermiques dégagées, bien que celles-ci soient différentes.

Enfin, comme évoqué précédemment, la solution permet d'adapter le refroidissement de la chaîne de puissance électrique et de la pile à combustible selon les phases de fonctionnement d'un tel véhicule et/ou les conditions de températures extérieures.

En remarque, la solution selon l'invention atteint donc l'objectif recherché d'assurer des conditions de températures adaptées au fonctionnement optimal de la chaîne de puissance électrique tout en assurant des conditions de températures adaptées au fonctionnement optimal de la pile à combustible et présente les avantages suivants :
- elle consomme peu d'énergie électrique, la pompe à haut débit étant moins consommatrice qu'une pompe à très haut débit.

## Revendications

1. Agencement (10) pour véhicule, notamment pour véhicule automobile (1), comprenant :
- une pile à combustible (2),
- un moteur électrique (42) de traction et/ou de propulsion, l'agencement (10) comprend un unique circuit de refroidissement (5) refroidissant la pile à combustible (2) et le moteur électrique (42), le circuit de refroidissement (5) comprenant deux parties :
- une première partie (20) à haut débit et haute température comprenant un échangeur haute température (22), la première partie (20) étant agencée pour refroidir la pile à combustible (2), et
- une deuxième partie (30) à bas débit et basse température comprenant un échangeur basse température (32), la deuxième partie (30) étant agencée pour refroidir le moteur électrique (42), la première partie (20) comprenant une pompe à haut débit (21), notamment un haut débit compris entre 8000 l/h et 9000 l/h,
**caractérisé en ce que** la deuxième partie (30) comprend une pompe à bas débit (31), notamment un bas débit compris entre 2000 l/h et 3000 I/h.

2. Agencement (10) selon la revendication précédente, **caractérisé en ce que** l'échangeur basse température (32) comprend une entrée (32E) et **en ce que** l'échangeur haute température (22) comprend une sortie (22S), la sortie (22S) de l'échangeur haute température (22) étant directement reliée à l'entrée (32E) de l'échangeur basse température (32).

3. Agencement (10) selon l'une des revendications précédentes, **caractérisé en ce qu'**il comprend une chaîne (40) de traction et/ou de propulsion électrique d'un tel véhicule, la chaîne (40) comprenant le moteur électrique (42) de traction et/ou de propulsion, un compresseur (44) et/ou un refroidisseur d'air d'admission (43), notamment d'air d'admission suralimenté, et/ou un ou des éléments d'électronique de puissance (41), la chaîne (40) étant agencée pour être refroidie par la deuxième partie (30) du circuit de refroidissement (5).

4. Agencement (10) selon l'une des revendications précédentes, **caractérisé en ce qu'**il comprend un aérotherme (51) destiné à permettre de chauffer un habitacle (6) d'un tel véhicule, l'aérotherme (51) étant agencé sur une branche (50) de la première partie (20) du circuit (5) ou étant agencé sur la deuxième partie (30), notamment en aval du refroidissement de la chaîne (40).

5. Véhicule, notamment véhicule automobile (1), **caractérisé en ce qu'**il comprend un agencement (10) selon l'une des revendications 1 à 4.

6. Procédé de fonctionnement d'un agencement (10) selon l'une des revendications 1 à 4, **caractérisé en ce qu'**en situation de roulage du véhicule,
le fluide admis dans l'échangeur haute température (22) est à une première température, notamment une première température comprise entre 77 degrés et 83 degrés, et ressort à une deuxième température, notamment une deuxième température comprise entre 71 degrés et 77 degrés, et le fluide admis dans l'échangeur basse température (32) est, ou est sensiblement, à la deuxième température et ressort à une troisième température, notamment une troisième température comprise entre 62 degrés et 68 degrés.

7. Procédé de fonctionnement d'un agencement (10) selon l'une des revendications 1 à 4, **caractérisé en ce que** préalablement au démarrage de la pile à combustible (2),
la première partie (20) et/ou la deuxième partie (30) du circuit de refroidissement (5) chauffe et/ou maintient la pile à combustible (2) à température.

8. Procédé de fonctionnement d'un agencement (10) selon la revendication 4, **caractérisé en ce que** préalablement au démarrage de la pile à combustible (2),
l'aérotherme (51) est parcouru par le fluide de sorte à réchauffer l'habitacle (6).

9. Procédé de fonctionnement d'un agencement (10) selon l'une quelconque des revendications 1 à 3, **caractérisé en ce qu'**en cas de fonctionnement du véhicule avec l'énergie de la batterie (3), alors la pompe à haut débit (21) est arrêtée.

10. Procédé de fonctionnement d'un agencement (10) selon la revendication 1 ou 2 en combinaison avec les revendications 3 et 4, **caractérisé en ce qu'**en situation de roulage du véhicule avec uniquement l'énergie de la pile à combustible, et sous situation de température extérieure négative, les calories dégagées par la chaîne de traction (40) et la pile à combustible (2) sont transmises au fluide de refroidissement traversant l'aérotherme (51), la circulation du fluide de refroidissement au travers des échangeurs haute et basse températures (22, 32) étant interrompue.

## Patentansprüche

1. Anordnung (10) für ein Fahrzeug, insbesondere für ein Kraftfahrzeug (1), umfassend:
- eine Brennstoffzelle (2),
- einen elektrischen Fahr- und/oder Antriebsmotor (42), wobei die Anordnung (10) einen einzigen Kühlkreislauf (5) umfasst, der die Brennstoffzelle (2) und den elektrischen Motor (42) kühlt, wobei der Kühlkreislauf (5) zwei Teile umfasst:
- einen ersten Teil (20) mit hohem Durchsatz und hoher Temperatur, der einen Hochtemperaturtauscher (22) umfasst, wobei der erste Teil (20) dazu ausgebildet ist, die Brennstoffzelle (2) zu kühlen, und
- einen zweiten Teil (30) mit niedrigem Durchsatz und niedriger Temperatur, der einen Niedertemperaturaustauscher (32) umfasst, wobei der zweite Teil (30) dazu ausgebildet ist, den elektrischen Motor (42) zu kühlen, wobei der erste Teil (20) eine Pumpe mit hohem Durchsatz (21) umfasst, insbesondere einem hohen Durchsatz zwischen 8000 l/h und 9000 l/h,
**dadurch gekennzeichnet, dass** der zweite Teil (30) eine Pumpe mit niedrigem Durchsatz (31) umfasst, insbesondere einem niedrigen Durchsatz zwischen 2000 l/h und 3000 l/h.

2. Anordnung (10) nach dem vorhergehenden Anspruch, **dadurch gekennzeichnet, dass** der Niedertemperaturtauscher (32) einen Einlass (32E) umfasst und dass der Hochtemperaturtauscher (22) einen Auslass (22S) umfasst, wobei der Auslass (22S) des Hochtemperaturtauschers (22) direkt mit dem Einlass (32E) des Niedertemperaturtauschers (32) verbunden ist.

3. Anordnung (10) nach einem der vorhergehenden Ansprüche, **dadurch gekennzeichnet, dass** sie einen elektrischen Fahr- und/oder Antriebsstrang (40) eines solchen Fahrzeugs umfasst, wobei der Strang (40) den elektrischen Fahr- und/oder Antriebsmotor (42), einen Kompressor (44) und/oder einen Ansaugluftkühler (43), insbesondere für aufgeladene Ansaugluft, und/oder ein oder mehrere Leistungselektronikelemente (41) umfasst, wobei der Strang (40) dazu ausgebildet ist, durch den zweiten Teil (30) des Kühlkreislaufs (5) gekühlt zu werden.

4. Anordnung (10) nach einem der vorhergehenden Ansprüche, **dadurch gekennzeichnet, dass** sie einen Lufterhitzer (51) umfasst, der dazu bestimmt ist, einen Innenraum (6) eines solchen Fahrzeugs zu heizen, wobei der Lufterhitzer (51) an einem Zweig (50) des ersten Teils (20) des Kreislaufs (5) angeordnet ist oder an dem zweiten Teil (30) angeordnet ist, insbesondere stromab der Kühlung des Strangs (40).

5. Fahrzeug, insbesondere Kraftfahrzeug (1), **dadurch gekennzeichnet, dass** es eine Anordnung (10) nach einem der Ansprüche 1 bis 4 umfasst.

6. Verfahren zum Betreiben einer Anordnung (10) nach einem der Ansprüche 1 bis 4, **dadurch gekennzeichnet, dass** in der Fahrsituation des Fahrzeugs
das in den Hochtemperaturtauscher (22) eingelassene Fluid eine erste Temperatur hat, insbesondere eine erste Temperatur zwischen 77 Grad und 83 Grad, und mit einer zweiten Temperatur austritt, insbesondere einer zweiten Temperatur zwischen 71 Grad und 77 Grad, und das in den Niedertemperaturtauscher (32) eingelassene Fluid die zweite Temperatur hat oder im Wesentlichen hat und mit einer dritten Temperatur austritt, insbesondere einer dritten Temperatur zwischen 62 Grad und 68 Grad.

7. Verfahren zum Betreiben einer Anordnung (10) nach einem der Ansprüche 1 bis 4, **dadurch gekennzeichnet, dass** vor dem Start der Brennstoffzelle (2)
der erste Teil (20) und/oder der zweite Teil (30) des Kühlkreislaufs (5) die Brennstoffzelle (2) erwärmt und/oder auf Temperatur hält.

8. Verfahren zum Betreiben einer Anordnung (10) nach Anspruch 4, **dadurch gekennzeichnet, dass** vor dem Start der Brennstoffzelle (2)
der Lufterhitzer (51) von dem Fluid durchflossen wird, so dass der Innenraum (6) erwärmt wird.

9. Verfahren zum Betreiben einer Anordnung (10) nach einem der Ansprüche 1 bis 3, **dadurch gekennzeichnet, dass** im Fall des Betriebs des Fahrzeugs mit der Energie der Batterie (3) die Pumpe mit hohem Durchsatz (21) abgeschaltet wird.

10. Verfahren zum Betreiben einer Anordnung (10) nach Anspruch 1 oder 2 in Kombination mit den Ansprüchen 3 und 4, **dadurch gekennzeichnet, dass** in der Fahrsituation des Fahrzeugs mit nur der Energie der Brennstoffzelle und bei negativer Außentemperatursituation die von dem Fahrstrang (40) und der Brennstoffzelle (2) freigesetzten Kalorien an das Kühlfluid übertragen werden, das durch den Lufterhitzer strömt (51), wobei die Zirkulation des Kühlfluids durch Hoch- und Niedertemperaturtauscher (22, 32) unterbrochen wird.

## Claims

1. Arrangement (10) for a vehicle, in particular for a motor vehicle (1), comprising:
- a fuel cell (2),
- an electric traction and/or propulsion motor (42), the arrangement (10) comprises a single cooling circuit (5) cooling the fuel cell (2) and the electric motor (42), the cooling circuit (5) comprising two parts:
- a first, high-flowrate and high-temperature part (20) comprising a high-temperature exchanger (22), the first part (20) being designed to cool the fuel cell (2), and
- a second, low-flowrate and low-temperature part (30) comprising a low-temperature exchanger (32), the second part (30) being designed to cool the electric motor (42), the first part (20) comprising a high-flowrate pump (21), in particular for a high flowrate of between 8000 l/h and 9000 l/h,
**characterized in that** the second part (30) comprises a low-flowrate pump (31), in particular for a low flowrate of between 2000 l/h and 3000 l/h.

2. Arrangement (10) according to the preceding claim, **characterized in that** the low-temperature exchanger (32) comprises an inlet (32E) and **in that** the high-temperature exchanger (22) comprises an outlet (22S), the outlet (22S) of the high-temperature exchanger (22) being directly connected to the inlet (32E) of the low-temperature exchanger (32).

3. Arrangement (10) according to either of the preceding claims, **characterized in that** it comprises an electric traction and/or propulsion chain (40) of such a vehicle, the chain (40) comprising the electric traction and/or propulsion motor (42), a compressor (44) and/or an intake air cooler (43), in particular for supercharged intake air, and/or one or more electronic power elements (41), the chain (40) being designed to be cooled by the second part (30) of the cooling circuit (5).

4. Arrangement (10) according to one of the preceding claims, **characterized in that** it comprises a unit heater (51) for heating a passenger compartment (6) of such a vehicle, the unit heater (51) being arranged on a branch (50) of the first part (20) of the circuit (5) or being arranged on the second part (30), in particular downstream of the cooling of the chain (40).

5. Vehicle, in particular motor vehicle (1), **characterized in that** it comprises an arrangement (10) according to one of Claims 1 to 4.

6. Method for operating an arrangement (10) according to one of Claims 1 to 4, **characterized in that**, when the vehicle is running,
the fluid admitted into the high-temperature exchanger (22) is at a first temperature, in particular a first temperature of between 77 degrees and 83 degrees, and exits at a second temperature, in particular a second temperature of between 71 degrees and 77 degrees, and the fluid admitted into the low-temperature exchanger (32) is, or is substantially, at the second temperature and exits at a third temperature, in particular a third temperature of between 62 degrees and 68 degrees.

7. Method for operating an arrangement (10) according to one of Claims 1 to 4, **characterized in that**, before the fuel cell (2) is started up,
the first part (20) and/or the second part (30) of the cooling circuit (5) heats and/or maintains the temperature of the fuel cell (2).

8. Method for operating an arrangement (10) according to Claim 4, **characterized in that**, before the fuel cell (2) is started up,
the unit heater (51) is passed through by the fluid so as to heat up the passenger compartment (6).

9. Method for operating an arrangement (10) according to any one of Claims 1 to 3, **characterized in that**, if the vehicle is operated with the energy from the battery (3), the high-flowrate pump (21) is stopped.

10. Method for operating an arrangement (10) according to Claim 1 or 2 in combination with Claims 3 and 4, **characterized in that**, when the vehicle is running with only the energy from the fuel cell, and when the outside temperature is below zero, the heat energy released by the traction chain (40) and the fuel cell (2) is transmitted to the cooling fluid passing through the unit heater (51), the circulation of the cooling fluid through the high- and low-temperature exchangers (22, 32) being interrupted.
